# EUROPÄISCHE PATENTSCHRIFT

(11) **EP 3 588 340 B1**
(45) Veröffentlichungstag und Bekanntmachung des Hinweises auf die Patenterteilung: **01.05.2024**
(21) Anmeldenummer: 18179762.2
(22) Anmeldetag: 26.06.2018
(51) Int. Cl.: G06F 21/32, G06F 21/62

(54) **COMPUTERIMPLEMENTIERTES VERFAHREN ZUM BETREIBEN EINER DATENSPEICHEREINRICHTUNG**
COMPUTER-IMPLEMENTED METHOD FOR OPERATING A DATA STORAGE DEVICE
PROCÉDÉ MIS EN UVRE PAR ORDINATEUR POUR FAIRE FONCTIONNER UN DISPOSITIF DE MÉMORISATION DE DONNÉES

(43) Veröffentlichungstag der Anmeldung: 01.01.2020
(73) Patentinhaber: GRAU Invest GmbH, 73529 Schwäbisch Gmünd (DE)
(72) Erfinder: Lechner, Ulrich, 86732 Oettingen in Bayern (DE); Lechner, Sebastian, 86732 Oettingen in Bayern (DE)
(74) Vertreter: Hoeger, Stellrecht & Partner Patentanwälte mbB

(56) Entgegenhaltungen:
- WO-A1-2017/125935
- US-A1- 2014 310 800
- US-A1- 2018 025 014
- US-B1- 9 317 686

## Beschreibung

Die Erfindung betrifft ein computerimplementiertes Verfahren zum Betreiben einer Datenspeichereinrichtung, umfassend ein Zugriffsmanagement für ein Filesystem, von welchem bei einer von einem Prozess in einer Datenverarbeitungseinrichtung generierten und der Datenspeichereinrichtung übermittelten Zugriffsanforderung für ein File des Filesystems dieses File für einen Filezugriff zur Verfügung gestellt wird. US 2014/310800 und WO 2017/125935 sind Teil des technischen Hintergrundes
Bei derartigen Verfahren besteht das Problem, dass Schadsoftware, insbesondere Ransomware, Zugriffsanforderungen auslösen und dabei Files verschlüsseln oder in anderer Weise beschädigen können.

Der Erfindung liegt daher die Aufgabe zugrunde, ein computerimplementiertes Verfahren zum Betreiben einer Datenspeichereinrichtung mit den vorstehend beschriebenen Merkmalen dahingehend zu verbessern, dass dieses gegen Schadsoftware, insbesondere Ransomware, geschützt ist.

Diese Aufgabe wird bei einem computerimplementierten Verfahren zum Betreiben einer Datenspeichereinrichtung erfindungsgemäß dadurch gelöst, dass das Zugriffsmanagement eine Filesicherung umfasst, von welcher bei einer dieser Filesicherung weitergeleiteten Zugriffsanforderung für das File ein Filesicherungslauf gestartet wird, dass die Zugriffsanforderung so lange blockiert wird, bis eine Sicherungskopie des Files erstellt und abgespeichert ist, dass anschließend die Zugriffsanforderung an einen Zugriffstreiber für das Filesystem weitergeleitet wird und dass von dem Zugriffstreiber der Zugriff durchgeführt wird.

Der Vorteil der erfindungsgemäßen Lösung ist darin zu sehen, dass die Filesicherung beim Filesicherungslauf einerseits eine Sicherungskopie des Files erstellt, auf welches zugegriffen werden soll, und andererseits den Zugriff auf das File so lange blockiert, bis die Sicherungskopie erstellt und abgespeichert ist, so dass selbst wenn der Filezugriff von Schadsoftware, insbesondere Ransomware, gestartet wird, die Verschlüsselung oder anderweitige Beschädigung des Files nicht zum Verlust der Informationen des Files führt, sondern nach wie vor die Sicherungskopie vorhanden ist, welche nach Entfernen des Prozesses der Schadsoftware oder Ransomware wieder aufgefunden werden kann und zur Verfügung steht.

Besonders vorteilhaft ist es dabei, wenn bei dem Filesicherungslauf die Sicherungskopie des Files in einem geschützten Datenspeicher gespeichert wird.

Ein derartiger geschützter Datenspeicher kann beispielsweise ein geschützter Bereich desselben Datenspeichers sein, auf dem das Filesystem gespeichert ist, es ist aber auch denkbar, einen separaten zusätzlichen Datenspeicher zum Abspeichern der Sicherungskopie vorzusehen.

Hinsichtlich der weiteren Ausbildung des Zugriffsmanagements wurden im Zusammenhang mit der bisherigen Erläuterung der erfindungsgemäßen Lösung keine näheren Angaben gemacht.

So sieht eine vorteilhafte Lösung vor, dass eine Fingerabdruckermittlung vorgesehen ist, die zu der jeweiligen Zugriffsanforderung einen die Zugriffsanforderung identifizierenden Fingerabdruck ermittelt und die Zugriffsanforderung zusammen mit dem Fingerabdruck weiterleitet.

Durch das Erstellen eines Fingerabdrucks zur Identifizierung der Zugriffsanforderung wird sichergestellt, dass im Nachhinein reproduziert werden kann, aufgrund welcher Zugriffsanforderung das File, auf welches ein Zugriff erfolgte, verschlüsselt oder beschädigt wurde.

Dabei kann die Ermittlung des Fingerabdrucks mehr oder weniger komplex erfolgen.

Einfache Möglichkeiten zur Ermittlung eines Fingerabdrucks ergeben sich beispielsweise auf der Basis von einer oder mehreren Informationen, wie einer Prozess ID und/oder einer Checksumme und/oder Informationen über bei dem Prozess eingesetzte Zusatzprogramme.

Dabei steigt der Grad der Eindeutigkeit des Fingerabdrucks mit dem Grad der Komplexität des Aufbaus und der Zusammensetzung des Fingerabdrucks.

Eine besonders bevorzugte Lösung sieht vor, dass die Fingerabdruckermittlung auf der Basis der in der Zugriffsanforderung enthaltenen Prozessinformationen und einem zu dem Prozess ermittelten eindeutigen Identifikationskriterium einen Fingerabdruck ermittelt.

Ein derartiger Fingerabdruck umfasst somit ein sehr hohes Maß an Eindeutigkeit des Fingerabdrucks.

Hinsichtlich der Ausführung der Fingerabdruckermittlung sind die unterschiedlichsten Möglichkeiten denkbar.

So sieht eine vorteilhafte Lösung vor, dass die Fingerabdruckermittlung vom Zugriffsmanagement erfolgt.

Dies ist insbesondere dann der Fall, wenn die Zugriffsanforderung in einer direkt mit der Datenspeichereinrichtung verbundenen Datenverarbeitungseinrichtung erfolgt.

Eine andere vorteilhafte Lösung sieht vor, dass die Fingerabdruckermittlung bei der Datenspeichereinrichtung vorgelagerten und die jeweiligen Zugriffsanforderung generierenden Clients erfolgt.

Diese Lösung ist insbesondere dann vorgesehen, wenn die Datenspeichereinrichtung über ein LAN-System mit den Clients kommuniziert.

Um in diesem Fall den Fingerabdruck und mit der Zugriffsanforderung zu verknüpfen, ist dabei vorzugsweise vorgesehen, dass der jeweilige Fingerabdruck der jeweiligen Zugriffsanforderung direkt zugeordnet und insbesondere mit dieser zusammen übermittelt wird.

Eine andere Lösung, bei welcher eine direkte Zuordnung ungünstig oder nicht möglich ist, sieht vor, dass der jeweilige Fingerabdruck mittels einer Kennung der Zugriffsanforderung zugeordnet wird, so dass sich der Fingerabdruck und die Zugriffsanforderung getrennt übermitteln lassen, jedoch dann beispielsweise das Zugriffsmanagement in der Lage ist, die Zuordnung von Fingerabdruck und Zugriffsanforderung vorzunehmen.

Darüber hinaus sieht eine weitere vorteilhafte Lösung des erfindungsgemäßen Verfahrens vor, dass das Zugriffsmanagement mindestens ein Zugriffsfilter umfasst, von welchem eine Zugriffsanforderung im Hinblick auf mindestens ein Filterkriterium überprüft wird und im Fall der Erfüllung dieses Filterkriteriums die Zugriffsanforderung unter Überspringen der Filesicherung direkt an den Zugriffstreiber weitergeleitet wird.

Ein derartiges Zugriffsfilter hat den großen Vorteil, dass damit nicht bei jeder Zugriffsanforderung eine Sicherungskopie eines Files erstellt werden muss, sondern eine Vielzahl von Zugriffsanforderungen, die das Filterkriterium erfüllt, direkt an den Zugriffstreiber weitergeleitet werden kann.

Insbesondere ist dabei vorgesehen, dass das Zugriffsfilter eine erste Filterstufe umfasst, von welcher eine Zugriffsanforderung daraufhin überprüft wird, ob diese ein existierendes oder ein neu zu generierendes File betrifft, und von welcher im Fall eines neu zu generierenden Files die Zugriffsanforderung unter Überspringen der Filesicherung direkt an den Zugriffstreiber weitergeleitet wird.

Eine andere vorteilhafte Lösung sieht vor, dass das Zugriffsfilter eine zweite Filterstufe aufweist, von welcher eine Zugriffsanforderung daraufhin überprüft wird, ob diese eine Schreibanforderung oder keine Schreibanforderung umfasst, und von welcher im Fall keiner Schreibanforderung die Zugriffsanforderung unter Überspringen der Filesicherung direkt an den Zugriffstreiber weitergeleitet wird.

Eine weitere vorteilhafte Lösung sieht vor, dass das Zugriffsfilter eine dritte Filterstufe aufweist, welche den der Zugriffsanforderung zugeordneten Fingerabdruck mit einer gespeicherten Weiß-Liste von als sicher bewerteten Fingerabdrücken vergleicht und welche im Fall einer Identität des Fingerabdrucks der Zugriffsanforderung mit einem Fingerabdruck in der Weiß-Liste die Zugriffsanforderung unter Überspringen der Filesicherung direkt an den Zugriffstreiber weiterleitet.

Jede dieser drei Filterstufen ermöglicht es somit die Zahl der Sicherungskopien von Files zu reduzieren.

Eine weitere vorteilhafte Lösung sieht vor, dass von dem Zugriffsmanagement aus der der Filesicherung zugeleiteten Zugriffsanforderung der Fingerabdruck extrahiert wird und in einer Grau-Liste einer Prozessprüfung gespeichert wird.

Eine derartige Extraktion des Fingerabdrucks und das Speichern desselben in einer Grau-Liste hat den Vorteil, dass nachfolgend die Möglichkeit besteht, den Fingerabdruck einer Weiß-Liste zuzuordnen.

So sieht eine vorteilhafte Lösung vor, dass von der Prozessprüfung die Grau-Liste einem Prüfvorgang zugeführt wird und dass von dem Prüfvorgang der jeweilige Fingerabdruck der Grau-Liste entweder in die Weiß-Liste der dritten Filterstufe oder an einen anderen Ort übertragen wird.

Der andere Ort kann ein Spambereich sein oder es kann aber auch der Fall sein, dass der Fingerabdruck als nicht sicherer Fingerabdruck verworfen wird.

Eine weitere vorteilhafte Lösung sieht vor, dass von der Prozessprüfung bei dem Prüfvorgang der jeweilige Fingerabdruck der Grau-Liste entweder in die Weiß-Liste der dritten Filterstufe oder in eine Schwarz-Liste übertragen wird.

Eine Schwarz-Liste hat dabei den Vorteil, dass damit nachvollzogen werden kann, dass der Fingerabdruck zu einem Prozess gehört, der durch Schadsoftware, insbesondere Ransomware, ausgelöst wurde.

Hinsichtlich der Durchführung der Prüfung besteht die Möglichkeit, dass der Prüfvorgang durch einen Benutzer durchgeführt wird.

Ein derartiger Benutzer kann dabei nach einem bestimmten Zeitablauf, beispielsweise nach einigen Tagen oder einigen Wochen feststellen, dass der für die Zugriffsanforderung verantwortliche Prozess nicht durch Schadsoftware oder Ransomware ausgelöst wurde, so dass der Benutzer in diesem Fall den Fingerabdruck in die Weiß-Liste übernehmen kann.

Dies lässt sich aber auch automatisieren nämlich dahingehend, dass dann, wenn nach einem bestimmten Zeitablauf, beispielsweise nach Tagen oder Wochen keine Beschädigung oder Verschlüsselung eines Files erfolgt ist, der Fingerabdruck in die Weiß-Liste übertragen wird.

Hinsichtlich der Abspeicherung des Fingerabdrucks sind unterschiedlichste Möglichkeiten denkbar.

So sieht eine vorteilhafte Lösung vor, dass von der Filesicherung der Sicherungskopie der Fingerabdruck zugeordnet wird.

Eine andere vorteilhafte Lösung sieht vor, dass von der Filesicherung beim Erstellen der Sicherungskopie der Fingerabdruck dem File zugeordnet wird, auf welches der Zugriff erfolgt.

Es besteht aber auch die Möglichkeit, dass beim Erstellen der Sicherungskopie der Fingerabdruck an einem anderen Ort abgespeichert wird, jedoch eine Zuordnung zu dem File, auf welches der Zugriff erfolgt, oder zu der Sicherungskopie durch Vermerk einer Verknüpfung erfolgt.

Darüber hinaus ist zum Schutz des Filesystems vorzugsweise vorgesehen, dass auf das Filesystem ein Zugriff des Zugriffstreibers über eine Block-Positions-Transformationsstufe erfolgt.

Eine Block-Positions-Transformationsstufe bewirkt, dass ein Teil der Blöcke eines Filesystem-Headers des Filesystems von den üblichen Blockpositionen, nämlich beispielsweise den ersten Blockpositionen des Filesystems, auf anderen Blockpositionen abgespeichert wird und bei der Ausführung eines Zugriffs auf das Filesystem in die ursprünglich vorgesehenen Blockpositionen gespiegelt wird, ohne dass sie in diesem abgespeichert sind.

Der Vorteil einer derartigen Block-Positions-Transformationsstufe ist darin zu sehen, dass dann, wenn der Zugriffstreiber durch einen Angriff von Schadsoftware ausgeschaltet wird oder auch lediglich die Block-Positions-Transformationsstufe durch einen Angriff von Schadsoftware ausgeschaltet wird, das Filesystem nicht mehr zugänglich ist, da durch die Verlagerung eines Teils der Blöcke des Filesystem-Headers die Files im Filesystem ohne die aktive Block-Positions-Transformationsstufe nicht mehr erkannt werden können.

Ergänzend oder alternativ zum Vorsehen einer Block-Positions-Transformationsstufe sieht eine weitere vorteilhafte Variante des erfindungsgemäßen Verfahrens vor, dass das Filesystem ein verschlüsseltes Filesystem ist und dass ein Zugriff des Zugriffstreibers über eine Verschlüsselungsstufe erfolgt.

Eine derartige Verschlüsselungsstufe hat den Vorteil, dass dann, wenn der Zugriffstreiber ausgeschaltet wird, die Verschlüsselungsstufe ebenfalls nicht mehr aktiviert wird und somit eine Zugriffsanforderung das jeweilige File nicht mehr erkennen und auffinden kann.

Darüber hinaus betrifft die Erfindung ein Datenverarbeitungssystem, umfassend einen oder mehrere Prozessoren, die so konfiguriert sind, dass sie das Verfahren gemäß einem der Ansprüche 1 bis 21 ausführen.

Ferner umfasst die Erfindung ein Computerprogrammprodukt umfassend Befehle, die bei der Ausführung des Programms durch einen Computer diesen veranlassen, das Verfahren gemäß einem der Ansprüche 1 bis 21 auszuführen.

Schließlich betrifft die Erfindung ein computerlesbares Speichermedium, umfassend Befehle, die bei der Ausführung durch einen Computer diesen veranlassen, das Verfahren gemäß den Ansprüchen 1 bis 21 auszuführen.

Weitere Merkmale und Vorteile der Erfindung sind Gegenstand der nachfolgenden Beschreibung sowie der zeichnerischen Darstellung einiger Ausführungsformen eines erfindungsgemäßen computerimplementierten Verfahrens, sowie eines Datenverarbeitungssystems, sowie eines Computerprogrammprodukts, sowie eines computerlesbaren Speichermediums.

In der Zeichnung zeigen:
- Fig. 1: eine schematische Darstellung eines ersten Ausführungsbeispiels eines erfindungsgemäßen Datenverarbeitungssystems;
- Fig. 2: eine vergrößerte schematische Darstellung der Schritte bei der Durchführung eines Zugriffsmanagements;
- Fig. 3: eine schematische Darstellung der Schritte bei einem Ausführungsbeispiel im Rahmen einer Prozessprüfung einer Grauliste;
- Fig. 4: eine schematische Darstellung der Schritte bei der Filesicherung;
- Fig. 5: eine schematische Darstellung eines zweiten Ausführungsbeispiels eines erfindungsgemäßen Datenverarbeitungssystems;
- Fig. 6: eine schematische Darstellung eines dritten Ausführungsbeispiels eines erfindungsgemäßen Datenverarbeitungssystems;
- Fig. 7: eine schematische Darstellung eines zweiten Ausführungsbeispiels einer erfindungsgemäßen Datenspeichereinrichtung und
- Fig. 8: eine schematische Darstellung eines dritten Ausführungsbeispiels einer erfindungsgemäßen Datenspeichereinrichtung.

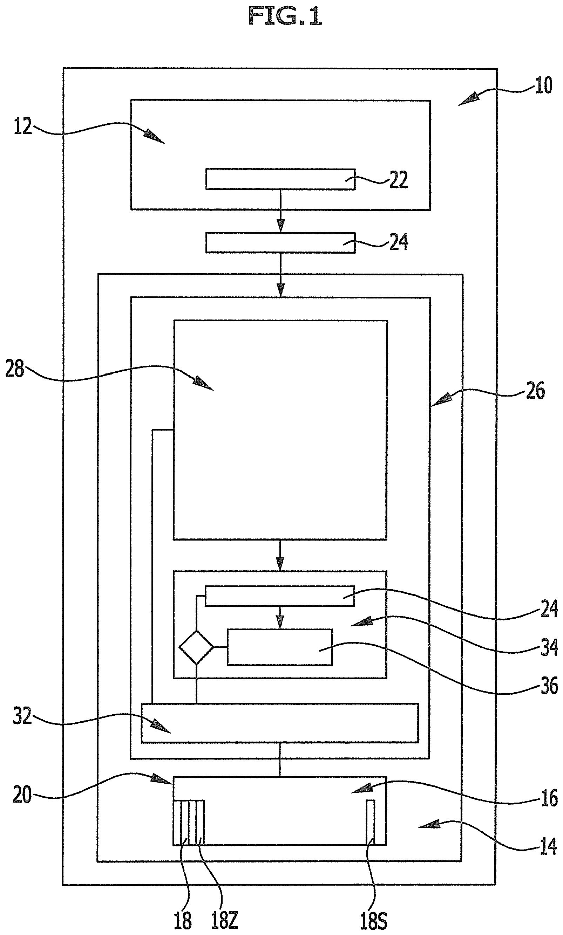

Ein Ausführungsbeispiel eines erfindungsgemäßen Datenverarbeitungssystems 10 umfasst, wie in Fig. 1 dargestellt, eine Datenverarbeitungseinrichtung 12 und eine mit dieser zusammenwirkende Datenspeichereinrichtung 14, in welcher ein Filesystem 16 gespeichert ist, welches eine Vielzahl einzelner Files 18 umfasst, die in einem physikalischen Datenspeicher 20 gespeichert sind.

Ein in der Datenverarbeitungseinrichtung 12, beispielsweise aufgrund eines Word- oder Excel-Programms, ablaufender Prozess 22 generiert, wenn er einen Zugriff auf ein bestimmtes File 18Z der Files 18 des Filesystems 16 benötigt, eine Zugriffsanforderung 24, welche von der Datenverarbeitungseinrichtung 12 der Datenspeichereinrichtung 14 übermittelt wird.

In der Datenspeichereinrichtung 14 ist ein als Ganzes mit 26 bezeichnetes Zugriffsmanagement vorgesehen, welches bei dem dargestellten Ausführungsbeispiel einen Zugriffsfilter 28 umfasst, der die Zugriffsanforderungen 24 im Hinblick auf mindestens ein sicheres Filterkriterium überprüft und im Fall der Erfüllung dieses Filterkriteriums die Zugriffsanforderung 24 direkt an einen Zugriffstreiber 32 übermittelt, welcher den Zugriff auf das Filesystem 16 ausführt.

Ferner umfasst das Zugriffsmanagement 26 eine Filesicherung 34, welche bei allen Zugriffsanforderungen 24, die das mindestens eine sichere Filterkriterium des Zugriffsfilters 28 nicht erfüllen, die Zugriffsanforderung 24 übermittelt wird.

Die Zugriffsanforderung 24 wird von der Filesicherung 34 zunächst so lange angehalten, bis durch einen Filesicherungslauf 36 der Filesicherung 34 eine Sicherungskopie 18S des jeweiligen Files 18Z, für das die Zugriffsanforderung 24 vorgesehen ist, erstellt und in einem sicheren Bereich des Filesystems 16, beispielsweise einem so genannten WORM-Bereich oder auch auf einem anderen Filesystem, abgespeichert wurde. Erst nach sicherem Abspeichern der Sicherungskopie 18S des Files 18Z wird die Zugriffsanforderung 24 an den Zugriffstreiber 32 weitergeleitet, welcher dann den Zugriff auf das jeweilige File 18Z im Filesystem 16 ausführt.

Der Zugriffsfilter 28 kann in unterschiedlichster Art und Weise ausgebildet sein und mit unterschiedlichsten sicheren Filterkriterien arbeiten.

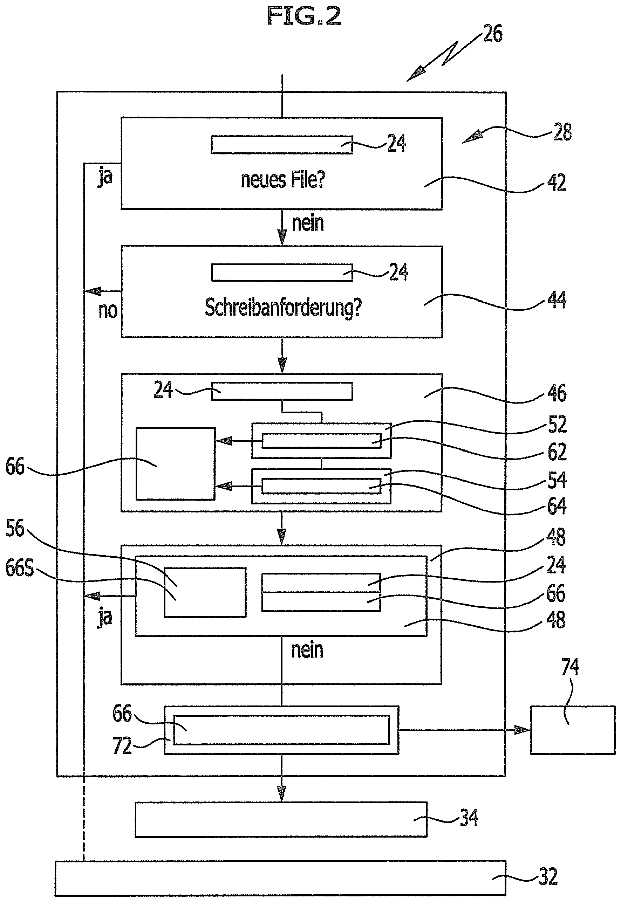

Ein in Fig. 2 dargestelltes Ausführungsbeispiel des Zugriffsfilters 28 umfasst eine erste Filterstufe 42, welche eine eingehende Zugriffsanforderung 24 daraufhin überprüft, ob diese ein existierendes File 18 oder ein neu zu generierendes File 18N betrifft, und im Fall eines neu zu generierenden Files wird die Zugriffsanforderung 24 direkt an den Zugriffstreiber 32 weitergeleitet.

Im Fall einer Zugriffsanforderung für ein existierendes File 18 leitet die erste Filtereinheit 42 die Zugriffsanforderung 24 an eine zweite Filterstufe 44 weiter, welche die Zugriffsanforderung 24 daraufhin überprüft, ob diese eine Schreibanforderung umfasst.

Liegt keine Schreibanforderung vor, leitet die zweite Filterstufe 44 die Zugriffsanforderung 24 direkt an den Zugriffstreiber 32 weiter.

Liegt eine Schreibanforderung vor, so leitet die zweite Filterstufe 44 die Zugriffsanforderung 24 an eine Fingerabdruckermittlung 46 weiter, welche zu der jeweiligen Zugriffsanforderung 24 diese identifizierenden Daten ermittelt, die einen "Fingerabdruck" der Zugriffsanforderung darstellen und eine Möglichkeit zur eindeutigen Identifikation der Zugriffsanforderung 24 darstellen.

Prinzipiell können für einen derartigen Fingerabdruck die verschiedensten Informationen, wie eine Prozess ID und/oder eine Checksumme und/oder Informationen über bei dem Prozess 22 eingesetzte Zusatzprogramme herangezogen werden, wobei der Grad der Eindeutigkeit des Fingerabdrucks mit dem Grad der Komplexität des Aufbaus und der Zusammensetzung des Fingerabdrucks steigt.

Beispielsweise werden zur Generierung eines Fingerabdrucks mit einem hohen Maß an Eindeutigkeit zu jeder Zugriffsanforderung in einer ersten Stufe 52 Prozessinformationen 62 aus der Zugriffsanforderung 24 ermittelt, die anzeigen, welcher Prozess 22 die Zugriffsanforderung 24 ausgelöst hat, und in einer zweiten Stufe 54 eindeutige Identifikationskriterien 64 zu dem Prozess 22 ermittelt.

Derartige eindeutige Identifikationskriterien 64 können beispielsweise Prüfsummen über das anfordernde Programm und/oder Prüfsummen über die DLL's des anfordernden Programms und/oder Prüfsummen über Lokationen und/oder Adressen des die Zugriffsanordnung startenden Programms und/oder Zeitstempel der letzten Modifikationen des die Zugriffsanforderung startenden Programms und insbesondere der DLL's dieses die Zugriffsanforderung startenden Programms sein.

Sowohl die Prozessinformationen 62 als auch die eindeutigen Identifikationskriterien 64 der Zugriffsanforderung 24 werden beispielsweise zu einem Fingerabdruck 66 kombiniert, der der Zugriffanforderung 24 zugeordnet wird.

In einer dritten Filterstufe 48 wird dann der Fingerabdruck 66 der Zugriffsanforderung 24 mit einer Weiß-Liste 56 verglichen, in welcher als sicher geltende Fingerabdrucke 66S gespeichert sind.

Handelt es sich bei der Zugriffsanforderung 24 um eine solche, deren Fingerabdruck 66 in der Weiß-Liste 56 als Fingerabdruck 66S vermerkt ist, so bewirkt die dritte Filterstufe 48, dass die Zugriffsanforderung 24 unter Überspringen des Filesicherungssystems 34 direkt an den Zugriffstreiber 32 weitergeleitet wird.

Ist dies nicht der Fall, so erfolgt ein Weiterleiten der Zugriffsanforderung 24 an die Filesicherung 34.

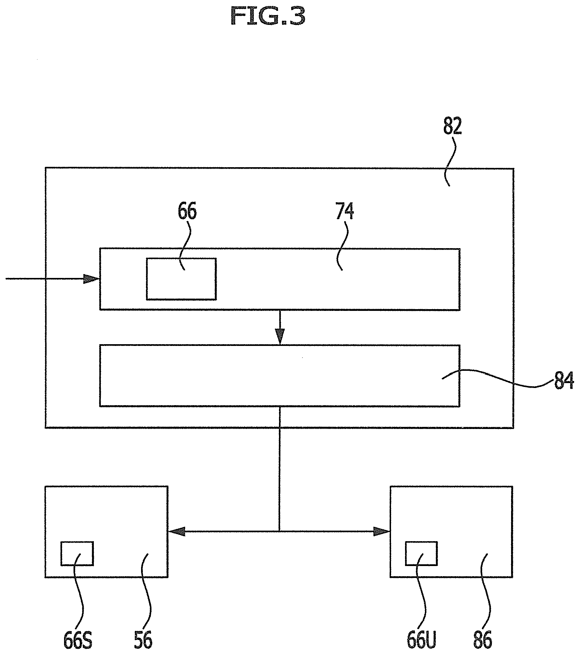

Mit der Weiterleitung der Zugriffsanforderung 24 an die Filesicherung 34 wird durch das Zugriffsmanagementsystem 26 mittels einer Kopiereinheit 72 der Fingerabdruck 66 in eine Grau-Liste 74 einer in Fig. 3 dargestellten Prozessprüfung 82 kopiert, welche, wie in Fig. 3 dargestellt, die Grau-Liste 74 einem Prüfvorgang 84 zur Verfügung stellt, welcher die in der Grau-Liste 74 enthaltenen Fingerabdrücke 66 aufgrund des Prüfvorgangs 84 entweder in die Weiß-Liste 56 als sicher geltenden Fingerabdruck 66S einträgt oder in eine Schwarz-Liste 86 als unsicheren Fingerabdruck 66U einträgt oder alternativ zum Eintrag in die Schwarz-Liste 86 in einer anderen Datei speichert oder sogar verwirft.

Der Prüfvorgang 84 kann dabei zeitverzögert zu dem Filezugriff erfolgen, beispielsweise durch einen Systemadministrator, welcher Stunden oder Tage nach dem jeweiligen Filezugriff den Fingerabdruck 66 manuell prüft und dabei entweder der Weiß-Liste 56 oder der Schwarz-Liste 86 zuordnet.

Eine Automatisierung der Überprüfung kann bereits dadurch erfragen, dass dann, wenn nach einem vorgegebenen Zeitraum, beispielsweise nach Tagen oder einer Woche, keine Schadsoftware festgestellt wurde, eine Zuordnung des Fingerabdrucks 66 zu der Weiß-Liste 56 erfolgt.

Alternativ besteht aber auch die Möglichkeit, den Prüfvorgang 84 durch einen vorbestimmten Prozessablauf zumindest partiell zu automatisieren und somit beispielsweise partiell den Prüfvorgang 84 automatisiert durch ein Programm durchzuführen und partiell - beispielsweise wenn das Programm keine eindeutige Zuordnung vornehmen kann - manuell, beispielsweise durch einen Systemadministrator, durchzuführen.

Im Zusammenhang mit der in Fig. 1 dargestellten Filesicherung 34 wurde lediglich die Ausführung des Filesicherungsablaufs 36 erläutert.

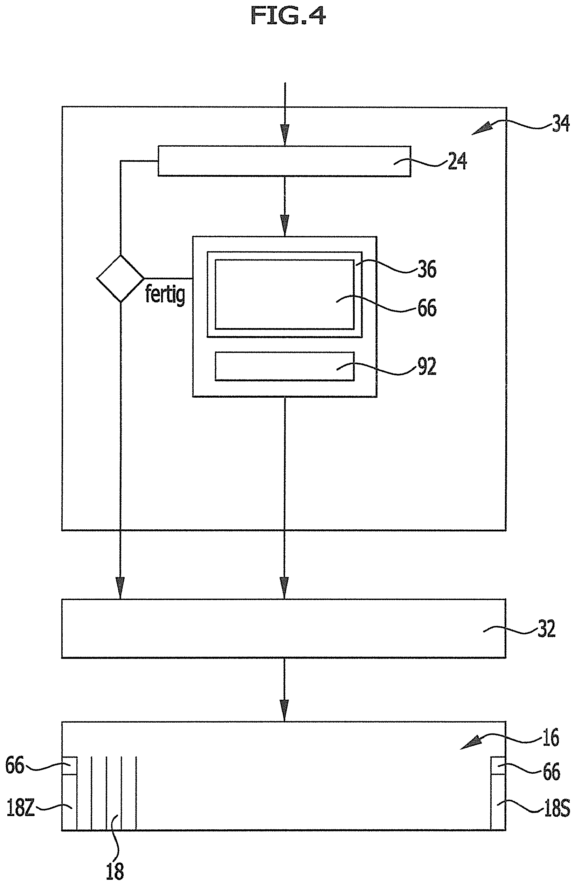

Vorzugsweise ist jedoch, wie in Fig. 4 dargestellt, die Filesicherung 34 so ausgebildet, dass sie den Fingerabdruck 66 der Sicherungskopie 18S des Files 18Z zuordnet und/oder dem File 18Z zugeordnet, auf welches aufgrund der Zugriffsanforderung 24 zugegriffen wurde.

Dabei wird der Fingerabdruck 66 entweder zusammen mit den jeweiligen Files 18S oder 18Z im Filesystem 16 gespeichert oder im Filesystem 16 an anderer Stelle gespeichert und durch eine geeignete Verknüpfung den Files 18S und/oder 18Z zugeordnet.

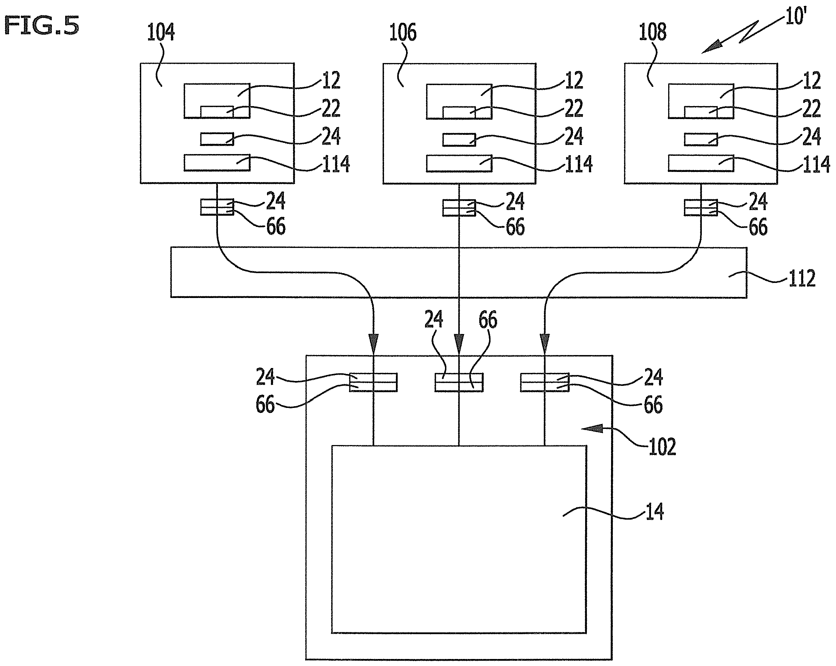

Bei einem zweiten Ausführungsbeispiel einer erfindungsgemäßen Datenverarbeitungsanlage 10', dargestellt in Fig. 5, ist ein Server 102 vorgesehen, welcher mit einer Vielzahl von Clients 104, 106, 108 über ein LAN-System 112 verbunden ist.

Jeder der Clients 104, 106, 108 umfasst eine Datenverarbeitungseinrichtung 12, welche jeweils im Rahmen eines Prozesses 22 eine Zugriffsanforderung 24 generieren kann.

In diesem Fall besteht für die Datenspeichereinrichtung 14 im Server 102 nicht die Möglichkeit, zusätzlich zu den Prozessinformationen 62 eindeutige Identifikationskriterien 64 zur Ermittlung des Fingerabdrucks 66 einer Zugriffsanforderung 24 zu ermitteln.

Bei dem in Fig. 5 dargestellten zweiten Ausführungsbeispiel eines Datenverarbeitungssystems 10' ist daher in jedem der Clients 104, 106, 108 eine dem Server 102 vorgelagerte Fingerabdruckermittlung 114 zugeordnet, welche zu der jeweiligen Zugriffsanforderung 24 den jeweiligen Fingerabdruck 66 ermittelt, der Zugriffsanforderung 24 zugeordnet und mit dieser dem Server 102 übermittelt, so dass über das LAN-System ein Paket aus der Zugriffsanforderung 24 mit dem jeweiligen Fingerabdruck 66 an den Server 102 gesandt wird und in dem Server 102 dann die Zugriffsanforderung 24 zusammen mit dem jeweiligen Fingerabdruck 66 zur Verfügung steht.

Im Übrigen arbeitet die Datenverarbeitungseinrichtung 14 bei dem zweiten Ausführungsbeispiel in derselben Weise, wie bereits im Zusammenhang mit dem ersten Ausführungsbeispiel beschrieben.

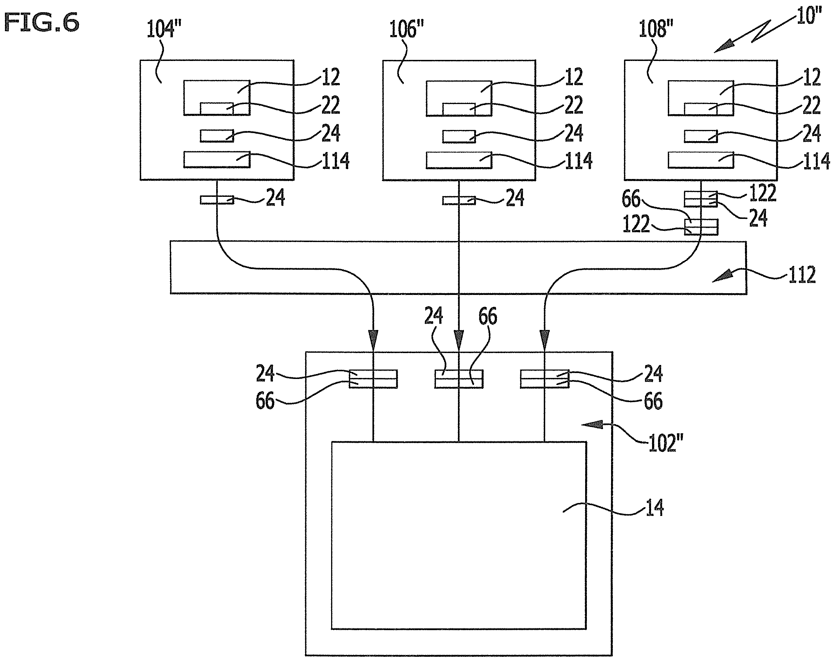

Bei einem dritten Ausführungsbeispiel einer erfindungsgemäßen Datenverarbeitungssystems 10", dargestellt in Fig. 6, ist ebenfalls ein Server 102" mit Clients 104", 106", 108" vorgesehen, wobei in diesen Clients 104", 106", 108" ebenfalls eine vorgelagerte Fingerabdruckermittlung 114 vorgesehen ist.

Allerdings wird in diesem Fall der ermittelte Fingerabdruck 66 nicht unmittelbar der Zugriffsanforderung 24 zugeordnet, sondern jeweils mit einer Kennung 122 versehen, die mit einer ebenfalls der Zugriffsanforderung 24 zugeordneten Kennung 122 identisch ist, und damit werden der Fingerabdruck 66 und die Zugriffsanforderung 24 über das LAN-System 112 dem Server 102" separat übermittelt.

Der Server 102" ordnet aufgrund der identischen Kennungen 122 den Fingerabdruck 66 wieder der jeweiligen Zugriffsanforderung 24 zu.

Im Übrigen arbeitet die Datenverarbeitungseinrichtung 14 bei dem dritten Ausführungsbeispiel in derselben Weise, wie bereits im Zusammenhang mit dem ersten Ausführungsbeispiel beschrieben.

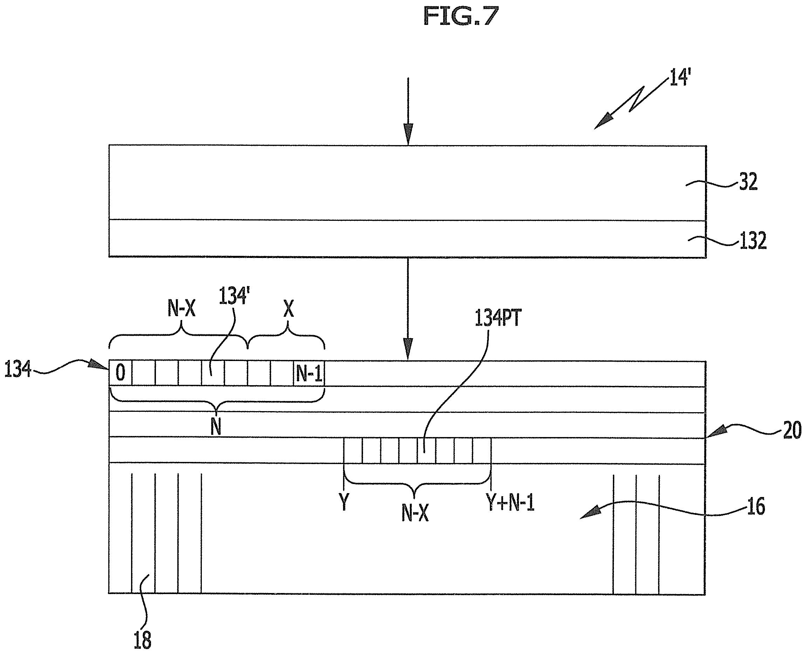

Bei einem zweiten Ausführungsbeispiel einer erfindungsgemäßen Datenspeichereinrichtung 14, dargestellt in Fig. 7, erfolgt der Filezugriff durch den Zugriffstreiber 32 auf das Filesystem 16' mittels einer Block-Positions-Transformationsstufe 132, die von dem Filtertreiber 32 eingesetzt werden muss, um die Files 18 im Filesystem 16' erkennen zu können, während ohne Aktivierung der Block-Positions-Transformationsstufe 132, lediglich irrelevante Daten im Filesystem 16' erkennbar sind.

Die Block-Positions-Transformationsstufe 132 bewirkt auf dem Speichermedium des Datenspeichers 20 des Filesystems 16', dass mindestens ein Teil des jeweiligen Filesystem Headers 134, der wesentliche Zugriffsinformation für das jeweilige Filesystem 16' enthält, auf dem Speichermedium nicht an dem üblichen Ort abgelegt ist sondern an einem anderen, durch die Block-Positions-Transformationsstufe 132 festgelegten Ort.

Wird die Block-Positions-Transformationsstufe 132 eingesetzt, so lässt diese für das zugreifende System das Filesystem 16' wie ein übliches Filesystem 16 erscheinen, obwohl der Filesystem-Header 134 an einem anderen Ort angelegt ist.

Beispielsweise umfasst der für das Filesystem 16' notwendige Filesystem-Header 134, der sich üblicherweise auf den Blockpositionen O bis N-1 befindet, N Blocks und von diesen N Blocks werden durch die Block-Positions-Transformationsstufe 132, beispielsweise die ersten N-X Blocks des Filesystem-Headers 134 in den Blockpositionen Y bis Y+N-X als Filesystem-Header-Teil 134PT abgelegt, während die restlichen X-Blocks an ihren Blockpositionen verbleiben.

Erfolgt nun ein Zugriff auf das Filesystem 16 mittels der Block-Positions-Transformationsstufe 132 so bewirkt diese ein Einspiegeln der Blocks in den Blockpositionen Y bis Y+N-X und somit des Filesystem-Header-Teils 134PT in die Blocks O bis N-X, so dass das Filesystem 16' für den Zugriffstreiber 32 wie ein Filesystem 16 erscheint, bei welchem der Filesystem-Header 134 auf den Blocks O bis N-1 vorliegt, so dass alle Files 18 zugänglich sind.

Ohne Einsatz der Block-Positions-Transformationsstufe 132 ist der Filesystem-Header 134 nicht identifizierbar und somit keines des Files 18 des Filesystems 16' auffindbar.

Um zu verhindern, dass ohne Einsatz der Block-Positions-Transformationsstufe 132 für einen Zugrifftreiber 32 überhaupt nicht erkennbar ist, dass ein Filesystem vorliegt, wird von der Block-Positions-Transformationsstufe 132 in den Blocks O bis N-X ein Ersatz-Filesystem-Header 134' abgelegt, der die Existenz eines Filesystems anzeigt, dessen Files allerdings ohne relevanten Inhalt sind, wobei bei aktiver Block-Positions-Transformationsstufe 132 der Ersatz-Filesystem-Header 134' nicht als solcher erkennbar ist, sondern nur der Filesystem-Header 134 erkannt wird.

Die Block-Positions-Transformationsstufe 132 hat den Vorteil, dass dann, wenn der Zugriffstreiber 32 beispielsweise durch Schadsoftware oder andere schädliche Einwirkungen wirkungslos gemacht sein sollte, kein Aktivieren der Block-Positions-Transformationsstufe 132 mehr erfolgt und folglich der Filesystem Header 134 und damit auch das gesamte Filesystem auf dem Speichermedium nicht mehr auffindbar ist.

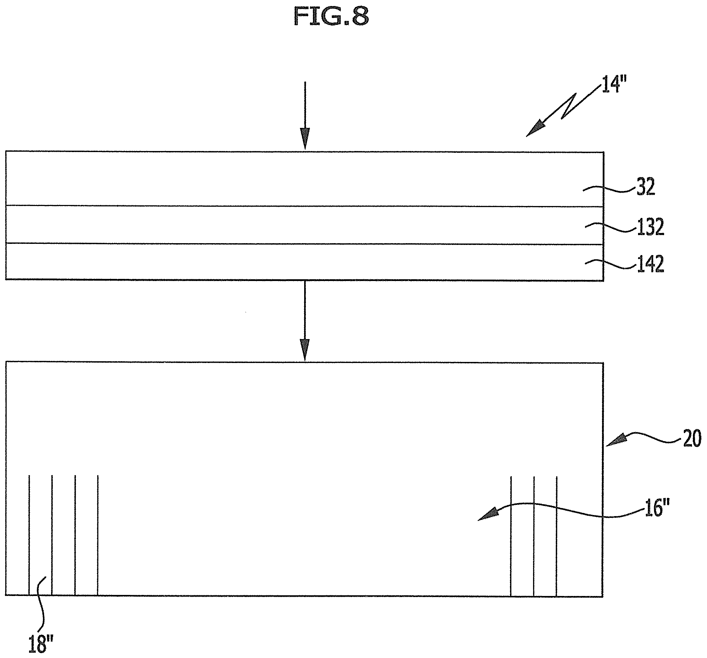

Bei einem dritten Ausführungsbeispiel einer erfindungsgemäßen Datenspeichereinrichtung 14", dargestellt in Fig. 8, ist das Filesystem 16" mit den Files 18" verschlüsselt und es ist zusätzlich eine Verschlüsselungsstufe 142 vorgesehen, die von dem Zugriffstreiber 32 aktiviert werden muss, um die verschlüsselten Files 18" im verschlüsselten Filesystem 16" erkennen zu können.

Alle erfindungsgemäßen Lösungen eröffnen nun die Möglichkeit, im Fall eines durch Schadsoftware, insbesondere Ransomware, unbrauchbar gemachten, beispielsweise verschlüsselten oder zerstörten Files 18 des Filesystems 16 aufgrund des diesem unbrauchbaren Files 18 zugeordneten Fingerabdrucks 66 die Sicherungskopien 18S oder die Files 18 nach denen durchzusuchen, die denselben Fingerabdruck 66 aufweisen und dann die unbrauchbaren Files 18 im Filesystem 16 durch deren Sicherungskopien 18S im Filesystem 16 zu ersetzen.

Vor dem Ersetzen wird in diesem Fall außerdem noch der Prozess 22 in der Datenverarbeitungseinrichtung 12, als solcher eliminiert, der aufgrund des Fingerabdrucks 66 als ein Prozess 22 identifiziert werden konnte, welcher zu unbrauchbaren Files 18 im Filesystem 16 geführt hat.

## Patentansprüche

1. Computerimplementiertes Verfahren zum Betreiben einer Datenspeichereinrichtung (14), umfassend ein Zugriffsmanagement (26) für ein Filesystem (16), von welchem bei einer von einem Prozess (22) in einer Datenverarbeitungseinrichtung (12) generierten und der Datenspeichereinrichtung (14) übermittelten Zugriffsanforderung (24) für ein File (18) des Filesystems (16) dieses File (18Z) für einen Filezugriff zur Verfügung gestellt wird, dass das Zugriffsmanagement (26) eine Filesicherung (34) umfasst, von welcher bei einer dieser Filesicherung (34) weitergeleiteten Zugriffsanforderung (24) für das File (18Z) ein Filesicherungslauf (36) gestartet wird, dass die Zugriffsanforderung (24) so lange blockiert wird, bis eine Sicherungskopie (18S) des Files (18Z) erstellt und abgespeichert ist, dass bei dem Filesicherungslauf die Sicherungskopie (18S) des Files (18Z) in einem geschützten Datenspeicher gespeichert wird, dass anschließend die Zugriffsanforderung (24) an einen Zugriffstreiber (32) für das Filesystem (16) weitergeleitet wird und dass von dem Zugriffstreiber (32) der Zugriff durchgeführt wird, **dadurch gekennzeichnet, dass** eine Fingerabdruckermittlung (46, 114) vorgesehen ist, die zu der jeweiligen Zugriffsanforderung einen die Zugriffsanforderung identifizierenden Fingerabdruck (66) ermittelt und die Zugriffsanforderung (24) zusammen mit dem Fingerabdruck (66) weiterleitet, dass von der Filesicherung (34) beim Erstellen der Sicherungskopie (18S) der Fingerabdruck (66) dem File (18Z) zugeordnet wird, auf welches der Zugriff erfolgt, dass von der Filesicherung (34) der Sicherungskopie (18S) der Fingerabdruck (66) zugeordnet wird, und dass durch das Erstellen des Fingerabdrucks zur Identifizierung der Zugriffsanforderung sichergestellt ist, dass im Nachhinein reproduziert werden kann, aufgrund welcher Zugriffsanforderung das File, auf welches ein Zugriff erfolgte, verschlüsselt oder beschädigt wurde.

2. Verfahren nach Anspruch 1, **dadurch gekennzeichnet, dass** insbesondere die Fingerabdruckermittlung (46, 114) den Fingerabdruck (66) auf der Basis von einer oder mehreren Informationen wie Prozess ID's und/oder Checksummen und/oder Informationen über bei dem Prozess eingesetzte Zusatzprogramme ermittelt, und dass insbesondere die Fingerabdruckermittlung (46) auf der Basis der in der Zugriffsanforderung (24) enthaltenen Prozessinformationen (62) und einem zu dem Prozess (22) ermittelten eindeutigen Identifikationskriterium den Fingerabdruck (66) ermittelt.

3. Verfahren nach Anspruch 2, **dadurch gekennzeichnet, dass** die Fingerabdruckermittlung (46) vom Zugriffsmanagement (26) erfolgt.

4. Verfahren nach Anspruch 2 oder 3, **dadurch gekennzeichnet, dass** die Fingerabdruckermittlung (114) bei der Datenspeichereinrichtung (14) vorgelagerten und die jeweilige Zugriffsanforderung (24) generierenden Clients (104, 106, 108) erfolgt, dass insbesondere der jeweilige Fingerabdruck (66) der jeweiligen Zugriffsanforderung direkt zugeordnet wird und/oder dass insbesondere der jeweilige Fingerabdruck (66) mittels einer Kennung (122) der Zugriffsanforderung (24) zugeordnet wird.

5. Verfahren nach einem der voranstehenden Ansprüche, **dadurch gekennzeichnet, dass** das Zugriffsmanagement (26) mindestens ein Zugriffsfilter (28) umfasst, von welchem eine Zugriffsanforderung (24) im Hinblick auf mindestens ein Filterkriterium überprüft wird und im Fall der Erfüllung dieses Filterkriteriums die Zugriffsanforderung (24) unter Überspringen der Filesicherung (34) direkt an den Zugriffstreiber (32) weitergeleitet wird.

6. Verfahren nach Anspruch 5, **dadurch gekennzeichnet, dass** das Zugriffsfilter (28) eine erste Filterstufe (42) umfasst, von welcher eine Zugriffsanforderung (22) daraufhin überprüft wird, ob diese ein existierendes (18) oder neu zu generierendes File (18N) betrifft, und von welcher im Fall eines neu zu generierenden Files (18N) die Zugriffsanforderung (24) unter Überspringen der Filesicherung (34) direkt an den Zugriffstreiber (32) weitergeleitet wird.

7. Verfahren nach Anspruch 5 oder 6, **dadurch gekennzeichnet, dass** das Zugriffsfilter (28) eine zweite Filterstufe (44) aufweist, von welcher eine Zugriffsanforderung (24) daraufhin überprüft wird, ob diese eine Schreibanforderung oder keine Schreibanforderung umfasst, und von welcher im Fall keiner Schreibanforderung die Zugriffsanforderung (24) unter Überspringen der Filesicherung (34) direkt an den Zugriffstreiber (32) weitergeleitet wird.

8. Verfahren nach einem der Ansprüche 5 bis 7, **dadurch gekennzeichnet, dass** das Zugriffsfilter eine dritte Filterstufe (48) aufweist, welche den der Zugriffsanforderung zugeordneten Fingerabdruck (66) mit einer gespeicherten Weiß-Liste (56) von als sicher bewerteten Fingerabdrücken vergleicht und welche im Fall einer Identität des Fingerabdrucks (66) der Zugriffsanforderung mit einem Fingerabdruck in der Weiß-Liste (56) die Zugriffsanforderung unter Überspringen der Filesicherung (34) direkt an den Zugriffstreiber (32) weiterleitet.

9. Verfahren nach einem der voranstehenden Ansprüche, **dadurch gekennzeichnet, dass** von dem Zugriffsmanagement (26) aus der der Filesicherung (34) zugeleiteten Zugriffsanforderung (24) der Fingerabdruck (66) extrahiert wird und in einer Grau-Liste (74) einer Prozessprüfung (82) gespeichert wird und dass insbesondere von der Prozessprüfung (82) die Grau-Liste (74) einem Prüfvorgang (84) zugeführt wird, und dass von dem Prüfvorgang (84) der jeweilige Fingerabdruck (66) der Grau-Liste (74) entweder in die Weiß-Liste (56) der dritten Filterstufe (48) oder an einen anderen Ort übertragen wird und/oder dass insbesondere von der Prozessprüfung bei dem Prüfvorgang der jeweilige Fingerabdruck (66) der Grau-Liste (74) entweder in die Weiß-Liste (56) der dritten Filterstufe (48) oder in eine Schwarz-Liste (86) übertragen wird, und/oder dass insbesondere der Prüfvorgang (84) durch einen Benutzer oder automatisiert durchgeführt wird.

10. Verfahren nach einem der voranstehenden Ansprüche, **dadurch gekennzeichnet, dass** auf das Filesystem (18) ein Zugriff des Zugriffstreibers (32) über eine Block-Positions-Transformationsstufe (132) erfolgt.

11. Verfahren nach einem der voranstehenden Ansprüche, **dadurch gekennzeichnet, dass** das Filesystem (16') ein verschlüsseltes Filesystem (16') ist und dass ein Zugriff des Zugriffstreibers (32) über eine Verschlüsselungsstufe (142) erfolgt.

12. Datenverarbeitungssystem umfassend einen oder mehrere Prozessoren, die so konfiguriert sind, dass sie das Verfahren gemäß einem der Ansprüche 1 bis 11 ausführen.

13. Computerprogrammprodukt umfassend Befehle, die bei der Ausführung des Programms durch einen Computer diesen veranlassen, das Verfahren gemäß einem der Ansprüche 1 bis 11 auszuführen.

14. Computerlesbares Speichermedium umfassend Befehle, die bei der Ausführung durch einen Computer diesen veranlassen, das Verfahren gemäß den Ansprüchen 1 bis 11 auszuführen.

## Claims

1. A computer-implemented method for operating a data storage device (14), including an access management unit (26) for a file system (16) by which, in the event of an access request (24) generated by a process (22) in a data processing device (12) and transmitted to the data storage device (14), for a file (18) of the file system (16), this file (18Z) is made available for file access, in that the access management unit (26) includes a file securing unit (34) by which, in the event of an access request (24) for the file (18Z) that is forwarded to this file securing unit (34), a file securing routine (36) is started, in that the access request (24) is blocked until a backup copy (18S) of the file (18Z) has been created and stored, in that during the file securing routine, the backup copy (18S) of the file (18Z) is stored in a protected memory, in that the access request (24) is then forwarded to an access layer (32) for the file system (16) and in that access is carried out by the access layer (32), **characterized in that** a fingerprint determining unit of (46, 114) is provided, which, for the respective access request, determines a fingerprint (66) that identifies the access request and forwards the access request (24) together with the fingerprint (66), **in that**, when the backup copy (18S) is created, the file securing unit (34) associates the fingerprint (66) with the file (18Z) that is accessed, **in that** the file securing unit (34) associates the fingerprint (66) with the backup copy (18S), and **in that** by the creation of the fingerprint for identifying the access request it is ensured that subsequently it can be reproduced on the basis of which access request the file that was accessed was encrypted or damaged.

2. The method as claimed in claim 1, **characterized in that** in particular the fingerprint determining unit (46, 114) determines the fingerprint (66) on the basis of one or more items of information, such as process IDs and/or checksums and/or information on additional programs used in the process, and **in that** in particular the fingerprint determining unit (46) determines the fingerprint (66) on the basis of the process information (62) in the access request (24), and on the basis of a unique identification criterion determined in relation to the process (22).

3. The method as claimed in claim 2, **characterized in that** the fingerprint determination (46) is performed by the access management unit (26).

4. The method as claimed in claim 2 or 3, **characterized in that** the fingerprint determination (114) is performed in the data storage device (14) of upstream clients (104, 106, 108) that generate the respective access request (24), **in that** in particular the respective fingerprint (66) is directly associated with the respective access request, and/or **in that** in particular the respective fingerprint (66) is associated with the access request (24) by means of an identifier (122).

5. The method as claimed in one of the preceding claims, **characterized in that** the access management unit (26) includes at least one access filter (28), which checks an access request (24) for at least one filter criterion and, in the event of this filter criterion being met, forwards the access request (24) directly to the access layer (32), bypassing the file securing unit (34).

6. The method as claimed in claim 5, **characterized in that** the access filter (28) includes a first filter stage (42), which checks whether an access request (22) relates to an existing file (18) or a file (18N) to be newly generated, and which, in the case of a file (18N) to be newly generated, forwards the access request (24) directly to the access layer (32), bypassing the file securing unit (34).

7. The method as claimed in claim 5 or 6, **characterized in that** the access filter (28) has a second filter stage (44), which checks whether an access request (24) includes a write request or not, and which, in the event that there is no write request, forwards the access request (24) directly to the access layer (32), bypassing the file securing unit (34).

8. The method as claimed in one of claims 5 to 7, **characterized in that** the access filter has a third filter stage (48), which compares the fingerprint (66) associated with the access request with a stored whitelist (56) of fingerprints that are evaluated as safe, and which, in the event that the fingerprint (66) of the access request is identical to a fingerprint in the whitelist (56), forwards the access request directly to the access layer (32), bypassing the file securing unit (34).

9. The method as claimed in one of the preceding claims, **characterized in that** the access management unit (26) extracts the fingerprint (66) from the access request (24) supplied to the file securing unit (34) and stores it in a gray list (74) of a process check (82), and **in that** in particular the process check (82) supplies the gray list (74) to a check procedure (84), and **in that** the check procedure (84) transfers the respective fingerprint (66) in the gray list (74) either to the whitelist (56) of the third filter stage (48) or to another location, and/or **in that** in particular, during the check procedure, the process check transfers the respective fingerprint (66) in the gray list (74) either to the whitelist (56) of the third filter stage (48) or to a blacklist (86), and/or **in that** in particular the check procedure (84) is carried out by a user or automatically.

10. The method as claimed in one of the preceding claims, **characterized in that** access to the file system (18) by the access layer (32) takes place by way of a block position transformation stage (132).

11. A method as claimed in one of the preceding claims, **characterized in that** the file system (16') is an encrypted file system (16'), and **in that** access by the access layer (32) takes place by way of an encryption stage (142).

12. A data processing system, including one or more processors that are configured to carry out the method as claimed in one of claims 1 to 11.

13. A computer program product, including commands that, when the program is executed by a computer, cause it to carry out the method as claimed in one of claims 1 to 11.

14. A computer-readable storage medium, including commands that, on execution by a computer, cause it to carry out the method as claimed in claims 1 to 11.

## Revendications

1. Procédé mis en œuvre par ordinateur pour faire fonctionner un dispositif de stockage de données (14), comprenant une gestion d'accès (26) pour un système de fichiers (16), par lequel lors d'une demande d'accès (24) pour un fichier (18) du système de fichiers (16) générée par un processus (22) dans un dispositif de traitement de données (12) et transmise au dispositif de stockage de données (14) ce fichier (18Z) est mis à disposition pour un accès au fichier,
que la gestion d'accès (26) comprend une sécurisation de fichier (34), par laquelle lors d'une demande d'accès (24) pour le fichier (18Z) transférée à cette sécurisation de fichier (34) une routine de sécurisation de fichier (36) est démarrée, que la demande d'accès (24) est bloquée jusqu'à ce qu'une copie de sécurisation (18S) du fichier (18Z) soit établie et mise en mémoire, que lors de la routine de sécurisation de fichier la copie de sécurisation (18S) du fichier (18Z) est mise en mémoire dans une mémoire de données protégée, que la demande d'accès (24) est ensuite transférée à un pilote d'accès (32) pour le système de fichiers (16) et que l'accès est réalisé par le pilote d'accès (32),
**caractérisé en ce qu'**une détermination d'empreinte digitale (46, 114) est prévue, qui détermine par rapport à la demande d'accès respective une empreinte digitale (66) identifiant la demande d'accès et transfère la demande d'accès (24) conjointement avec l'empreinte digitale (66), que par la sécurisation de fichier (34) lors de l'établissement de la copie de sécurisation (18S) l'empreinte digitale (66) est associée au fichier (18Z) auquel l'accès s'effectue, que l'empreinte digitale (66) est associée à la copie de sécurisation (18S) par la sécurisation de fichier (34), et que par l'établissement de l'empreinte digitale pour l'identification de la demande d'accès il est garanti qu'après coup il soit possible de reproduire sur la base de quelle demande d'accès le fichier, auquel un accès s'est effectué, a été chiffré ou endommagé.

2. Procédé selon la revendication 1, **caractérisé en ce qu'**en particulier la détermination d'empreinte digitale (46, 114) détermine l'empreinte digitale (66) sur la base d'une ou plusieurs informations telles que les identifiants de processus et/ou sommes de contrôle et/ou informations sur des programmes additionnels utilisés lors du processus, et qu'en particulier la détermination d'empreinte digitale (46) détermine l'empreinte digitale (66) sur la base des informations de processus (62) contenues dans la demande d'accès (24) et d'un critère d'identification univoque déterminé par rapport au processus (22).

3. Procédé selon la revendication 2, **caractérisé en ce que** la détermination d'empreinte digitale (46) s'effectue par la gestion d'accès (26).

4. Procédé selon la revendication 2 ou 3, **caractérisé en ce que** la détermination d'empreinte digitale (114) s'effectue pour des clients (104, 106, 108) situés en amont du dispositif de stockage de données (14) et générant la demande d'accès (24) respective, qu'en particulier l'empreinte digitale (66) respective est directement associée à la demande d'accès respective et/ou qu'en particulier l'empreinte digitale (66) respective est associée à la demande d'accès (24) au moyen d'une identification (122).

5. Procédé selon l'une quelconque des revendications précédentes, **caractérisé en ce que** la gestion d'accès (26) comprend au moins un filtre d'accès (28), par lequel une demande d'accès (24) en ce qui concerne au moins un critère de filtre est contrôlée et au cas où ce critère de filtre serait rempli la demande d'accès (24) est transférée directement au pilote d'accès (32) en sautant la sécurisation de fichier (34).

6. Procédé selon la revendication 5, **caractérisé en ce que** le filtre d'accès (28) comprend un premier étage de filtre (42), par lequel une demande d'accès (22) est contrôlée pour voir si celle-ci concerne un fichier (18N) existant (18) ou à générer à nouveau, et par lequel dans le cas d'un fichier (18N) à générer à nouveau la demande d'accès (24) est transférée directement au pilote d'accès (32) en sautant la sécurisation de fichier (34).

7. Procédé selon la revendication 5 ou 6, **caractérisé en ce que** le filtre d'accès (28) présente un deuxième étage de filtre (44), par lequel une demande d'accès (24) est contrôlée pour voir si celle-ci comprend une demande d'écriture ou aucune demande d'écriture, et par lequel en cas d'aucune demande d'écriture la demande d'accès (24) est transférée directement au pilote d'accès (32) en sautant la sécurisation de fichier (34).

8. Procédé selon l'une quelconque des revendications 5 à 7, **caractérisé en ce que** le filtre d'accès présente un troisième étage de filtre (48), lequel compare l'empreinte digitale (66) associée à la demande d'accès à une liste blanche (56) d'empreintes digitales évaluées comme sûres mise en mémoire et lequel dans le cas d'une identité de l'empreinte digitale (66) de la demande d'accès avec une empreinte digitale dans la liste blanche (56) transfère la demande d'accès directement au pilote d'accès (32) en sautant la sécurisation de fichier (34).

9. Procédé selon l'une quelconque des revendications précédentes, **caractérisé en ce que** l'empreinte digitale (66) est extraite de la demande d'accès (24) amenée à la sécurisation de fichier (34) par la gestion d'accès (26) et est mise en mémoire dans une liste grise (74) d'un contrôle de processus (82) et qu'en particulier la liste grise (74) est acheminée à une opération de contrôle (84) par le contrôle de processus (82), et que l'empreinte digitale (66) respective de la liste grise (74) est transmise soit dans la liste blanche (56) du troisième étage de filtre (48) soit à un autre endroit par l'opération de contrôle (84) et/ou qu'en particulier lors de l'opération de contrôle l'empreinte digitale (66) respective de la liste grise (74) est transmise soit dans la liste blanche (56) du troisième étage de filtre (48) soit dans une liste noire (86) par le contrôle de processus, et/ou qu'en particulier l'opération de contrôle (84) est réalisée par un utilisateur ou de manière automatique.

10. Procédé selon l'une quelconque des revendications précédentes, **caractérisé en ce qu'**un accès du pilote d'accès (32) au système de fichiers (18) s'effectue par l'intermédiaire d'un étage de transformation de position de bloc (132).

11. Procédé selon l'une quelconque des revendications précédentes, **caractérisé en ce que** le système de fichiers (16') est un système de fichiers (16') chiffré et qu'un accès du pilote d'accès (32) s'effectue par l'intermédiaire d'un étage de chiffrement (142) .

12. Système de traitement de données comprenant un ou plusieurs processeurs, qui sont configurés de sorte qu'ils exécutent le procédé selon l'une quelconque des revendications 1 à 11.

13. Produit-programme d'ordinateur comprenant des instructions qui lors de l'exécution du programme par un ordinateur amènent celui-ci à exécuter le procédé selon l'une quelconque des revendications 1 à 11.

14. Support de stockage lisible par ordinateur comprenant des instructions qui lors de l'exécution par un ordinateur amènent celui-ci à exécuter le procédé selon les revendications 1 à 11.
